# FASCICULE DE BREVET EUROPEEN

(11) **EP 1 257 756 B1**
(45) Date de publication et mention de la délivrance du brevet: **01.09.2004**
(21) Numéro de dépôt: 01907846.8
(22) Date de dépôt: 20.02.2001
(51) Int. Cl.: F16L 11/12, F16L 9/12

(54) **TUBULURE DE TRANSPORT DE CARBURANT RESISTANTE AU FEU**
FEUERBESTÄNDIGER KRAFTSTOFFSCHLAUCH
FIRE-RESISTANT FUEL TRANSPORT PIPE

(30) Priorité: 25.02.2000 FR 0002405
(43) Date de publication de la demande: 20.11.2002
(73) Titulaire: NOBEL PLASTIQUES, 92000 Nanterre (FR)
(72) Inventeur: MILHAS, Pierre, F-51300 Vitry-le-François (FR)
(74) Mandataire: Robert, Jean-Pierre
(86) Numéro de dépôt international: PCT/FR2001/000489
(87) Numéro de publication internationale: WO 2001/065162

(56) Documents cités:
- EP-A- 0 010 751
- DE-A- 19 504 616
- FR-A- 2 698 153
- GB-A- 2 306 605

## Description

La présente invention concerne une structure de tubulure en matière plastique résistante au feu, principalement destinée à l'industrie automobile et dans ce cadre, à former un tuyau de remplissage de réservoir d'essence.

Pour ignifuger des conduits en matière plastique par nature inflammables, il existe deux techniques. La première consiste à choisir le matériau formant la paroi de la conduite parmi des polymères fluorés ou des composés ayant une charge retardatrice de flamme. Le matériau intrinsèquement résistant au feu tel qu'un polymère fluoré est un matériau très onéreux entre trois et huit fois le prix du matériau de base utilisé pour réaliser ce type de produit. Pour ce qui concerne les composés qui comprennent des charges retardatrices de flamme, ces composés du fait de cette charge ne présentent plus de caractéristiques mécaniques ou d'imperméabilité suffisante pour l'application envisagée dans la construction automobile.

Il a été envisagé de réaliser des tubes multicouches dans lesquels la couche externe est formée par un matériau résistant au feu, donc avec pouvoir de protection du matériau interne, lequel lui est adapté à former barrière pour le liquide c'est-à-dire le carburant du véhicule, mais peu apte à résister au feu. Cette seconde couche intimement liée à la première est de coût élevé et ne possède pas de propriétés mécaniques suffisamment intéressantes pour constituer une canalisation de carburant pour automobile.

Des conduits à paroi multicouche de ce genre sont connus par exemple par GB-A-2 306 605, DE-A 19 504 616, FR 2 698 153 ou EP-A-0 010 751.

Par la présente invention on entend apporter une autre solution au problème de la protection d'une tubulure de carburant et notamment une tubulure de remplissage de réservoir.

A cet effet, la tubulure de l'invention en matière plastique est telle que sa paroi est formée par un tube annelé en matière plastique inflammable, par un tube lisse en matière plastique limitant la propagation de la flamme et par une composition ignifuge, logée entre les deux tubes.

Il convient de donner quelques définitions des matériaux employés dans les tubulures de carburant en relation avec le feu. C'est ainsi qu'un matériau résistant à la flamme est un matériau qui permet à la pièce en test de conserver ses caractéristiques durant un temps donné au contact d'une flamme calibrée. Un matériau résistant à l'incendie ou résistant au feu est un matériau qui permet à la pièce en test de conserver ses caractéristiques durant un temps donné durant l'immersion de l'ensemble dans un incendie contrôlé. Enfin, un matériau non propagateur de flamme est un matériau dont la combustion se produit de telle sorte qu'il ne propage pas de flamme en dehors des zones directement en contact avec celle-ci.

La structure de l'invention est telle que par l'emploi de matériaux relativement bon marché tels que les ignifuges et des matériaux non propagateurs de flamme tels que le polychlorure de vinyle, on obtient de manière économique un tube qui devient résistant au feu pendant plus de 80 secondes en regard des tests normalisés pratiqués par les constructeurs automobiles.

Pour éviter que cette tubulure ait une surface intérieure annelée au contact avec le carburant, surface importante qui nuit à la performance en perméabilité et qui engendre du bruit en favorisant un écoulement turbulent et des vapeurs de carburant du fait même de cette turbulence, la paroi de la tubulure de l'invention peut comporter un tube lisse en matière plastique revêtant intérieurement le tube annelé.

Le matériau ignifuge introduit dans les espaces définis par le tube annelé et le tube extérieur peut se présenter sous forme pulvérulente, sous forme d'une huile visqueuse ou sous forme d'un liquide réticulable donc devenant solide. Il peut comprendre divers composants qui ajoutent à ces qualités d'inertie à l'égard du feu, des qualités d'intumescence, c'est-à-dire une sorte de moussage qui développe en direction de la flamme une peau durcissant et formant bouclier retardateur de propagation de la chaleur en direction de l'intérieur du tube.

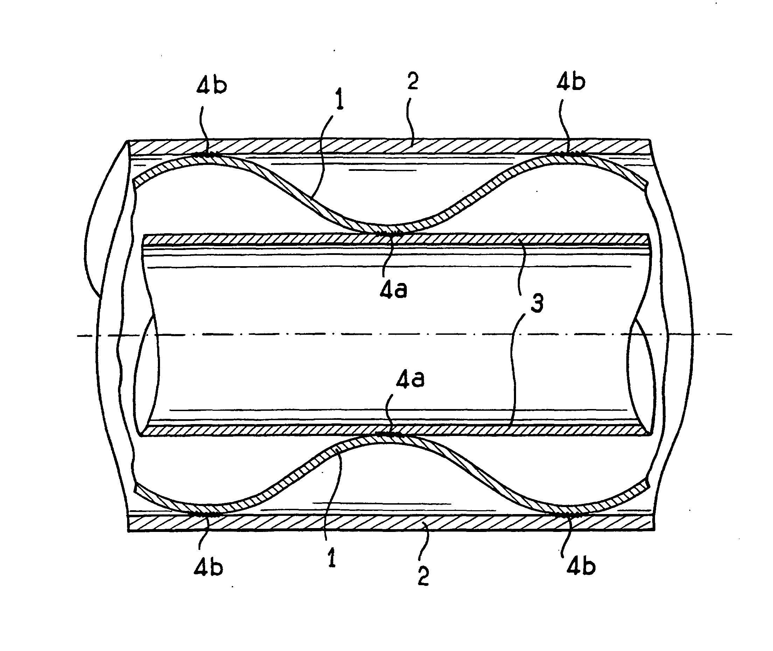

La structure de la paroi de tubulure selon l'invention est représentée par la figure unique.

On constate au vu de cette figure que cette paroi comporte un tube annelé 1 revêtu extérieurement d'un tube lisse 2 et intérieurement d'un autre tube lisse 3. Il existe des machines de coextrusion qui sont capables de produire de telles structures en continu. Dans ce cas, les trois tubes sont reliés entre eux au sommet intérieur 4a et extérieur 4b des ondes du tube annelé. La mise en place du matériau de remplissage entre le tube annelé et le tube extérieur peut être également réalisée grâce à ces machines qui permettent justement d'introduire en continu un produit entre l'un au moins des tubes lisses et le tube annelé.

On peut envisager d'autres méthodes de fabrication séparées des trois tubes formant la paroi de la tubulure selon l'invention. Dans ce cas, ces trois tubes sont glissés les uns dans les autres en préfabrication et sont solidarisés les uns aux autres par exemple à leurs extrémités au moyen d'une soudure ou d'un collage. L'introduction du matériau intercalé entre le tube annelé et le tube extérieur lisse pourrait se faire préalablement à l'introduction du tube 1 dans le tube 2, par un comblement des ondes extérieures du tube 1 avant son glissement dans le tube 2, comblement réalisé par tout moyen adapté à la nature du produit ignifuge.

Le tube 1 et/ou le tube 3 seront réalisés dans une matière possédant de bonnes propriétés barrière à l'égard du carburant ; une telle matière peut être formée par un polyamide, un composé à base de polyamide, un polyéthylène haute densité ou un alliage de polyamide-polyéthylène, tout produit inflammable rapidement. La couche externe 2 sera quant à elle formée par un matériau retardateur de flamme, c'est-à-dire classiquement par un polychlorure de vinyle. En ce qui concerne le matériau ignifuge, s'il est sous forme pulvérulente, il s'agira de tout minéral, généralement un hydroxyde de sel métallique, additionné pour des raisons de prix avec une quantité plus ou moins importante de talc. S'il s'agit d'une composition liquide, elle comprendra comme produit majeur une huile de silicone dont on connaît la qualité à être intrinsèquement résistante au feu. A ce composant on peut ajouter une variété d'additifs lui apportant leurs propriétés propres telles que des produits ignifuges organiques en phase liquide et/ou des composés à fonction intumescente tels que des polyphosphates d'ammonium et/ou des charges minérales pulvérulentes et/ou des agents de réticulation et/ou des agents barrière à propriété céramique sous l'effet de la chaleur tel que le produit de la société BRUNER MOND connu commercialement sous le nom de CEEPREE.

### Exemples :

Un matériau ignifuge en poudre utilisé est constitué d'un mélange de 60% en poids d'hydroxyde de magnésium ou d'hydroxyde d'aluminium et de 40% en poids de talc de LUZERNAC. Une application possible d'une telle poudre en comblement au moins partiel des ondes extérieures du tube 1 peut être réalisée par projection électrostatique.

Un produit ignifuge en phase liquide comprendra 40% en poids d'huile de silicone (par exemple un produit connu commercialement sous le nom de RHODORSIL de la société RHONE POULENC), 25% en poids d'ammonium polyphosphate qui constitue un composé ayant des propriétés intumescentes sous l'effet de la chaleur, additionné de 5% en poids de pentaérythritol qui constitue l'additif nécessaire à son efficacité, 5% de mélamine qui est également un additif nécessaire à l'efficacité des produits intumescents, et 25% en poids de talc, cette charge minérale favorisant l'intumescence des produits précédents par génération de précurseurs.

Plus généralement une telle composition ignifuge liquide comprendra en poids entre 40 et 60% d'huile résistante au feu, entre 15 et 25% de polyphosphate d'ammonium, entre 5 et 10% d'un ou plusieurs composés activateurs du polyphosphate d'ammonium et entre 10 et 25% de charge minérale telle qu'un talc.

Ce composé liquide est en réalité destiné à devenir solide sous l'effet d'un agent de réticulation. C'est ainsi que l'huile résistante au feu est une huile de silicone réticulable et la composition ci-dessus décrite comporte pour 5% en poids un agent de réticulation de cette huile.

Enfin, le produit ignifuge peut se présenter sous forme visqueuse, c'est-à-dire sous forme d'une composition comprenant au maximum 20% de liquide sous forme d'huile de silicone, le reste étant formé par des charges ou des compositions intumescentes.

Dans un premier exemple, la composition est partagée en poids à raison de 20% d'huile de silicone RHODORSIL, à raison de 60% d'hydroxyde de sel métallique d'aluminium ou de magnésium, à raison de 5% d'antimoine et à raison de 15% de talc.

Dans un autre exemple, les fractions étant exprimées en poids du mélange total, les 20% d'huile de silicone sont additionnés de 40% du produit à propriété céramique CEEPREE, de 20% d'hydroxyde de magnésium, de 12% d'ammonium polyphosphate (produit intumescent) avec ses activateurs Pentaérythritol et Mélamine à raison de 3% chacun et 2% d'antimoine.

La mise en oeuvre d'un produit de type visqueux est analogue à la mise en oeuvre d'une colle par pompe et filière d'application dans les ondulations du tube annelé 1.

## Revendications

1. Tubulure en matière plastique particulièrement résistante au feu, comportant un paroi formée par un tube annelé (1) en matière plastique inflammable, un tube lisse (2) revêtant extérieurement le tube annelé et réalisé en matière plastique limitant la propagation de la flamme **caractérisée par** une composition ignifuge logée entre les deux tubes.

2. Tubulure selon la revendication 1, **caractérisée en ce que** sa paroi comporte un tube lisse (3) en matière plastique revêtant intérieurement le tube annelé.

3. Tubulure selon la revendication 2, **caractérisée en ce que** la matière plastique du tube lisse extérieur est un polychlorure de vinyle.

4. Tubulure selon l'une quelconque des revendications précédentes, **caractérisée en ce que** la composition ignifuge se présente sous forme d'un mélange pulvérulent.

5. Tubulure selon la revendication 4, **caractérisée en ce que** le mélange pulvérulent comporte entre 30 et 60% en poids d'hydroxyde de sel métallique et entre 70 et 30% en poids de talc.

6. Tubulure selon la revendication 5, **caractérisée en ce que** le produit ignifuge comporte un composé intumescent du type polyphosphate d'ammonium.

7. Tubulure selon l'une quelconque des revendications 1 à 4, **caractérisée en ce que** les composés ignifuges se présentent sous forme d'une huile résistante au feu chargée du mélange pulvérulent selon la revendication 6, à raison de 60 à 80% en poids.

8. Tubulure selon l'une quelconque des revendications 1 à 4, **caractérisée en ce que** la composition ignifuge se présente sous forme liquide et comprend en poids entre 40 et 60% d'huile résistante au feu, entre 15 et 25% de polyphosphate d'ammonium, entre 5 et 10% d'au moins un composé activateur du polyphosphate d'ammonium et entre 10 et 25% de talc.

9. Tubulure selon la revendication 8, **caractérisée en ce que** l'huile est une huile de silicone réticulable et **en ce que** la composition comporte un agent de réticulation à raison de 5% en poids.

## Patentansprüche

1. Schlauch aus Kunststoff, der insbesondere feuerfest ist, umfassend eine Wand, die aus einem Wellrohr (1) aus entflammbarem Kunststoff und einem Glattrohr (2) gebildet ist, welches das Wellrohr außen überdeckt und aus einem Kunststoff hergestellt ist, der die Flammenausbreitung eingrenzt, **gekennzeichnet durch** eine flammensichere Zusammensetzung, die zwischen den beiden Rohren vorgesehen ist.

2. Schlauch nach Anspruch 1, **dadurch gekennzeichnet, dass** seine Wand ein Glattrohr (3) aus Kunststoff umfasst, welches das Wellrohr innen überdeckt.

3. Schlauch nach Anspruch 2, **dadurch gekennzeichnet, dass** der Kunststoff des äußeren Glattrohres Polyvinylchlorid ist.

4. Schlauch nach einem der vorhergehenden Ansprüche, **dadurch gekennzeichnet, dass** die flammensichere Zusammensetzung in Form einer pulverförmigen Mischung vorliegt.

5. Schlauch nach Anspruch 4, **dadurch gekennzeichnet, dass** die pulverförmige Mischung zwischen 30 und 60 Gew.-% Hydroxidmetallsalz und zwischen 70 und 30 Gew.-% Talkum umfaßt.

6. Schlauch nach Anspruch 5, **dadurch gekennzeichnet, dass** das flammensichere Produkt eine intumeszente Verbindung vom Typ Ammonium-Polyphosphat umfasst.

7. Schlauch nach einem der Ansprüche 1 bis 4, **dadurch gekennzeichnet, dass** die flammensicheren Verbindungen in Form von feuerfestem Öl vorliegen, das mit der pulverförmigen Mischung nach Anspruch 6 in einer Menge von 60 bis 80 Gew.-% versetzt ist.

8. Schlauch nach einem der Ansprüche 1 bis 4, **dadurch gekennzeichnet, dass** die flammensichere Zusammensetzung in flüssiger Form vorliegt und zwischen 40 und 60 Gew.-% feuerfestes Öl, zwischen 15 und 25 Gew.-% Ammonium-Polyphosphat, zwischen 5 und 10 Gew.-% mindestens einer Aktivatorverbindung des Ammonium-Polyphosphats und zwischen 10 und 25 Gew.-% Talkum enthält.

9. Schlauch nach Anspruch 8, **dadurch gekennzeichnet, dass** das Öl ein vernetzbares Silikonöl ist und dass die Zusammensetzung ein Vernetzungsmittel in einer Menge von 5 Gew.-% enthält.

## Claims

1. A plastics material tube that is particularly resistant to fire, comprising awall constituted by a corrugated tube (1) of flammable plastics material, a smooth tube (2) lining the outside of the corrugated tube and made of a plastics material that limits flame propagation, **characterized by** a fireproofing composition received between the two tubes.

2. A tube according to claim 1, **characterized in that** its wall has a smooth tube (3) of plastics material lining the inside of the corrugated tube.

3. A tube according to claim 2, **characterized in that** the plastics material of the outer smooth tube is polyvinylchloride.

4. A tube according to any preceding claim, **characterized in that** the fireproofing composition is in the form of a powder mixture.

5. A tube according to claim 4, **characterized in that** the powder mixture comprises 30% to 60% by weight metallic salt hydroxide and 70% to 30% by weight talc.

6. A tube according to claim 5, **characterized in that** the fireproofing substance includes an intumescent compound of the ammonium polyphosphate type.

7. A tube according to any one of claims 1 to 4, **characterized in that** the fireproofing compounds are in the form of a fire-resistant oil filled with a powder mixture according to claim 6 and constituting 60% to 80% by weight thereof.

8. A tube according to any one of claims 1 to 4, **characterized in that** the fireproofing composition is in liquid form and comprises by weight 40% to 60% fire-resistant oil, 15% to 25% ammonium polyphosphate, 5% to 10% of at least one compound for activating ammonium polyphosphate, and 10% to 25% talc.

9. A tube according to claim 8, **characterized in that** the oil is a curable silicone oil and **in that** the composition includes a curing agent constituting 5% by weight.
